# DEMANDE DE BREVET EUROPEEN

(11) **EP 3 014 991 A1**
(43) Date de publication de la demande: **04.05.2016**
(21) Numéro de dépôt: 15191126.0
(22) Date de dépôt: 22.10.2015
(51) Int. Cl.: A01K 87/02, A01K 97/08

(54) **DISPOSITIF DE RANGEMENT POUR CANNE À PÊCHE À LA LIGNE, ET CANNE À PÊCHE À LA LIGNE ÉQUIPÉE D'UN TEL DISPOSITIF**

(30) Priorité: 28.10.2014 FR 1460344
(71) Demandeur: Andre, Gilles, 73500 Modane (FR)
(72) Inventeur: Andre, Gilles, 73500 Modane (FR)
(74) Mandataire: Hecké, Gérard

(57) **Abrégé**

Dispositif de rangement pour canne à pêche (2) à la ligne (3), la canne à pêche (2) étant démontable et comprenant un brin principal (4) équipé d'un moulinet (8) pour enrouler la ligne (3) et au moins un brin secondaire (5, 6) démontable configuré pour s'emboîter avec le brin principal (4) afin de monter la canne à pêche (2), le dispositif comprenant :

- un moyen de rangement (11) pour loger ledit au moins un brin secondaire (5, 6), le moyen de rangement (11) comportant un moyen d'accrochage (15) pour accrocher le moyen de rangement (11) au brin principal (4), 11), ledit moyen de rangement (11) étant un cylindre creux fermé à une extrémité et ouvert à l'autre extrémité, et
- un moyen d'enroulement (12) pour enrouler la ligne (3) de sorte que ledit au moins un brin secondaire (5, 6) soit maintenu solidaire avec le brin principal (4),

où le moyen de rangement (11) comporte deux moyens d'accrochage (15, 16) pour accrocher le moyen de rangement (11) au brin principal (4) et éloignés l'un de l'autre pour être accrochés de part et d'autre du moulinet (8).

## Description

### Domaine technique de l'invention

L'invention concerne le rangement pour canne à pêche à la ligne, en particulier les cannes à pêche démontables.

### État de la technique

Actuellement, on utilise différentes cannes à pêche selon le type de pêche pratiqué, par exemple des cannes à pêche télescopiques, ou des cannes à pêche démontables multibrins, ou encore des cannes à pêche à un seul brin. Plus particulièrement, on utilise des cannes à pêche suffisamment longues, pouvant aller jusqu' à quatre mètres, pour effectuer des lancers lointains. Par exemple, on utilise de longues cannes à pêche pour pêcher à la mouche. En outre, le pêcheur peut être amené à se déplacer en forêt, par exemple pour la pêche en rivière ou en lac, et dans ce cas, les cannes à pêche télescopiques ou démontables sont préférées à celles qui sont monobrin, car elles sont moins encombrantes. Toutefois, l'utilisateur peut avoir besoin de démonter et remonter plusieurs fois sa canne à pêche lorsqu'il souhaite se déplacer à divers endroits. En outre, l'utilisateur peut être amené à se déplacer avec une ou plusieurs cannes à pêche démontées. Lorsqu'il utilise une canne à pêche télescopique, le rangement des brins s'effectue à l'intérieur d'un brin principal comprenant le moulinet pour enrouler la ligne. Mais de telles cannes sont lourdes, et on préférera des cannes multibrins démontables qui sont plus légères et plus maniables, car les brins démontables ont des diamètres inférieurs à ceux d'une canne télescopique. Par contre, les cannes à pêche multibrins démontables sont également encombrantes lorsqu'elles sont démontées. On peut prévoir des housses pour ranger les brins démontés, mais il faut alors démonter la ligne afin d'éviter qu'elle s'emmêle dans la housse. En outre, lorsque le pêcheur doit démonter et remonter sa ligne, les manoeuvres sont fastidieuses.

On peut citer le brevet américain US3832796 qui divulgue un porteur de brins d'une canne à pêche, comprenant une paire de bras formant deux mâchoires pour maintenir deux brins aux extrémités des bras, le brevet américain US3508357 qui divulgue un porteur de brins d'une canne à pêche, comprenant deux jambes creuses pour loger deux brins, et le brevet américain US 6021597 qui divulgue une canne à pêche à deux brins emboîtables, comportant une agrafe attachée à une section d'un brin et munie d'un crochet pour accrocher l'autre brin. Mais ces porteurs de brins ne permettent pas de ranger plusieurs brins démontés.

### Objet de l'invention

L'objet de l'invention consiste à fournir un moyen pour transporter facilement une canne à pêche démontable.

Un autre objet de l'invention est de fournir un moyen pour faciliter le temps de montage et de démontage d'une canne à pêche démontable.

Selon un aspect de l'invention, il est proposé un dispositif de rangement pour canne à pêche à la ligne, la canne à pêche étant démontable et comprenant un brin principal équipé d'un moulinet pour enrouler la ligne et au moins un brin secondaire démontable configuré pour s'emboîter avec le brin principal afin de monter la canne à pêche.

Le dispositif de rangement comprend :
- un moyen de rangement pour loger ledit au moins un brin secondaire, le moyen de rangement comportant deux moyens d'accrochage pour accrocher le moyen de rangement au brin principal et éloignés l'un de l'autre pour être accrochés de part et d'autre du moulinet, et
- un moyen d'enroulement pour enrouler la ligne de sorte que ledit au moins un brin secondaire soit maintenu solidaire avec le brin principal.

Ainsi, on offre un dispositif de rangement simple et léger qui peut être transporté facilement avec la canne à pêche, sans gêner le pêcheur.

Le moyen de rangement peut être un cylindre creux fermé à une extrémité pour maintenir ledit au moins un brin secondaire avec le brin principal, et ouvert à l'autre extrémité pour laisser passer ledit au moins un brin secondaire lors de son logement dans le moyen de rangement.

Le dispositif peut comporter un moyen de maintien pour maintenir ledit au moins un brin secondaire avec le brin principal, pourvu d'un moyen d'accrochage pour accrocher le moyen de maintien au brin principal.

Le moyen de maintien peut être un cylindre creux ouvert à ses deux extrémités pour laisser passer ledit au moins un brin secondaire lors de son logement dans le moyen de rangement.

Les moyens d'accrochage du moyen de rangement peuvent être configurés pour accrocher de manière amovible le moyen de rangement au brin principal.

Le moyen d'accrochage du moyen de maintien peut être configuré pour accrocher de manière amovible le moyen de maintien au brin principal ou au moyen de rangement.

Le dispositif peut en outre comprendre au moins un piton pour accrocher le dispositif lorsque ledit au moins un brin secondaire est logé dans le moyen de rangement.

Selon un autre aspect de l'invention, il est proposé une canne à pêche à la ligne, comprenant un brin principal équipé d'un moulinet pour enrouler la ligne et au moins un brin secondaire démontable configuré pour s'emboîter avec le brin principal afin de monter la canne à pêche, et comprenant un dispositif de rangement tel que défini ci-avant.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- la figure 1, illustre schématiquement une vue en perspective d'un mode de réalisation d'un dispositif de rangement pour canne à pêche selon l'invention ;
- la figure 2, illustre schématiquement une vue en perspective du dispositif de rangement de la figure 1 lorsque la canne à pêche est montée ; et
- la figure 3, illustre schématiquement une vue en perspective du dispositif de rangement de la figure 1 lorsque la canne à pêche est démontée.

### Description détaillée

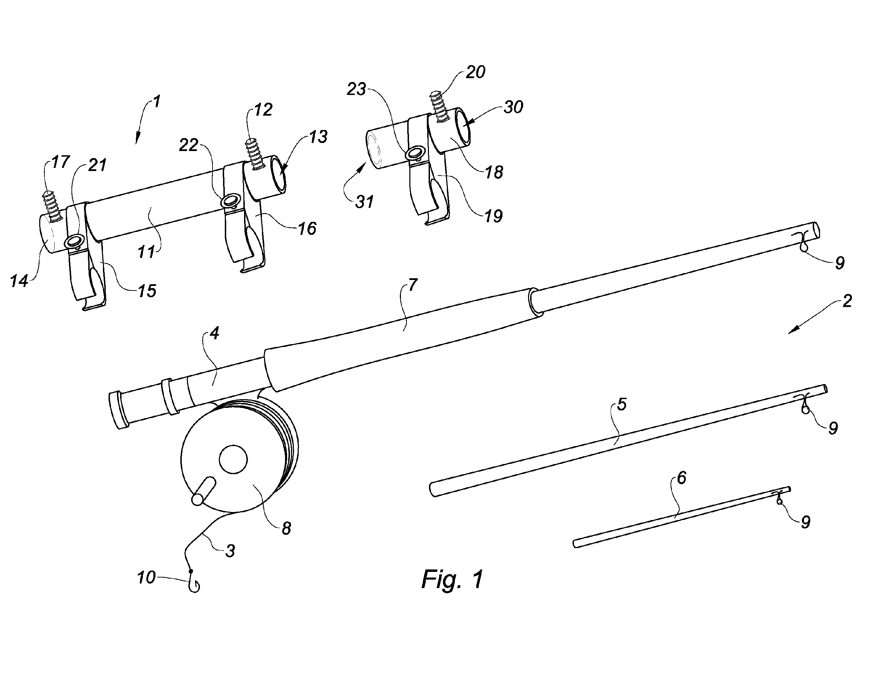

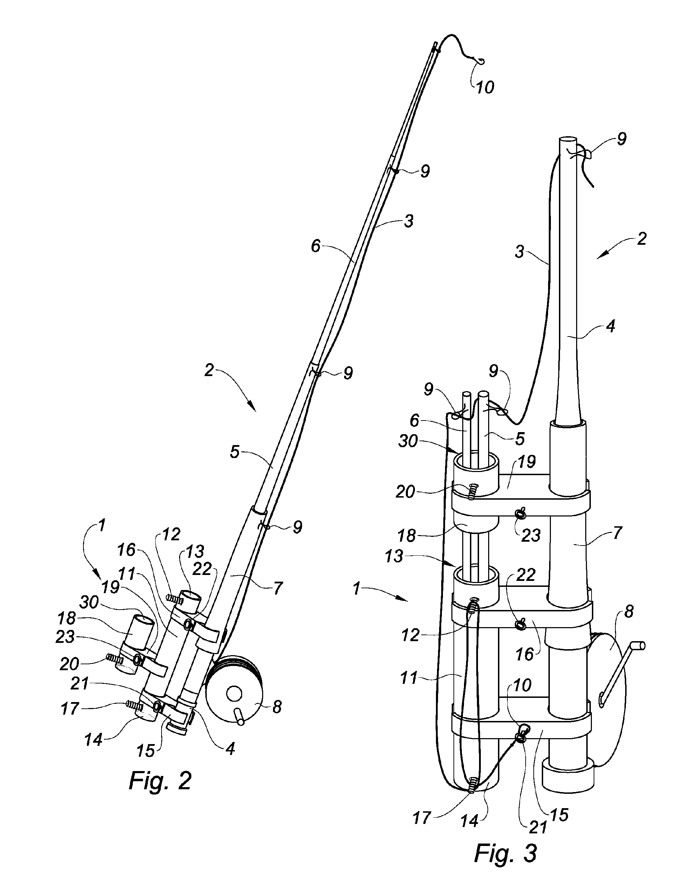

Sur la figure 1, on a représenté un dispositif de rangement 1 pour une canne à pêche 2 à la ligne 3. La canne à pêche 2 est démontable et comporte un brin principal 4 et au moins un brin secondaire 5, 6 démontable. La canne à pêche 2 peut également comprendre plusieurs brins secondaires démontables 5, 6. Le brin principal 4 comporte une poignée 7, pour une prise en main de la canne à pêche 2, et un moulinet 8 pour enrouler et dérouler la ligne 3. Les brins secondaires 5, 6 sont démontables, c'est-à-dire qu'ils sont configurés pour s'emboîter les uns avec les autres et avec le brin principal 4 afin de monter la canne à pêche 2, comme illustré sur la figure 2. Sur la figure 1, on a représenté la canne à pêche dans une position démontée, c'est-à-dire lorsque les brins secondaires 5, 6 sont détachés entre eux et du brin principal 4. Par ailleurs, le brin principal 4 et les brins secondaires 5, 6, comportent, chacun, au moins un anneau 9 dans lequel passe la ligne 3 lorsque la canne à pêche 2 est montée. En outre, la ligne 3 comprend un hameçon 10, ou une cuillère, fixé à une de ses extrémités.

Le dispositif de rangement 1 comporte un moyen de rangement 11 et au moins un moyen d'enroulement 12. Le moyen de rangement 11 est configuré pour loger au moins un brin secondaire 5, 6. De façon générale, le moyen de rangement 11 est un cylindre creux. On entend par cylindre, un solide limité par une surface cylindrique engendrée par un ensemble de droites parallèles, notées génératrices, s'appuyant sur une courbe plane fermée, notée directrice, et deux plans parallèles coupant les génératrices. Le moyen de rangement 11 comporte une ouverture 13 à une extrémité pour permettre un passage des brins secondaires 5, 6 dans le moyen de rangement 11. Avantageusement, le moyen de rangement 11 comporte une autre extrémité fermée 14 afin de maintenir les brins secondaires 5, 6, au sein du moyen de rangement 11, lorsque le moyen de rangement 11 est en position verticale par rapport au sol, comme illustré à la figure 3. De manière général, le moyen de rangement 11 forme un étui pour loger les brins secondaires 5, 6. Le moyen de rangement 11 peut être, par exemple un tube creux pour fournir un dispositif de rangement 1 simple à réaliser. Le moyen de rangement 11 peut être un boîtier, par exemple un parallélépipède creux, de forme allongée pour retenir les brins secondaires lors du transport de la canne à pêche 2. Le moyen de rangement 11 comporte au moins un moyen d'accrochage 15, 16 pour accrocher le moyen de rangement 11 au brin principal 4. Avantageusement, le moyen de rangement 11 comporte deux moyens d'accrochage 15, 16 pour renforcer l'accrochage au brin principal 4. Les moyens d'accrochage 15, 16 peuvent être deux crochets 15, 16 pour épouser la forme du brin principal 4, qui est généralement cylindrique à section circulaire, et pour serrer le brin principal 4. De préférence, un premier crochet 15 est configuré pour accrocher le moyen de rangement 11 à la poignée 7 du brin principal 4, et un deuxième crochet 16 est configuré pour accrocher une extrémité du brin principal 4 éloignée de la poignée 7. Lorsque la poignée 7 a une épaisseur supérieure au corps du brin principal 4, les diamètres des crochets 15, 16 peuvent être différents. Par exemple, les crochets 15, 16 sont éloignés l'un de l'autre, pour être accrochés de part et d'autre du moulinet 8, afin de laisser un espace pour ne pas gêner la prise en main de la canne à pêche 2. Les moyens d'accrochage 15, 16 peuvent être d'un autre type, comme par exemple des sangles, ou des lanières à bande autoagrippante. Par exemple, les moyens d'accrochage 15, 16 sont élastiques pour permettre d'accrocher de manière amovible le moyen de rangement 11 au brin principal 4. En variante, les moyens d'accrochage 15, 16 sont configurés pour accrocher de façon fixe le moyen de rangement 11 au brin principal 4.

Le moyen d'enroulement 12 permet d'enrouler la ligne 3 de sorte que les brins secondaires 5, 6 soient maintenus solidaires avec le brin principal 4. Lorsque les brins secondaires 5, 6 sont logés dans le moyen de rangement 11, l'utilisateur peut enrouler la ligne 3 autour du moyen d'enroulement 12 pour maintenir les brins secondaires 5, 6 solidaires du brin principal 4. Avantageusement, le moyen de rangement 11 peut comporter un moyen d'enroulement additionnel 17 pour améliorer l'enroulement de la ligne 3. Par exemple, les moyens d'enroulement 12, 17 peuvent être des tiges filetées. En variante, les moyens d'enroulement 12, 17 sont des tiges comportant, chacune, des moyens d'accrochage, par exemple des disques parallèles disposés autour de la tige. Plus particulièrement, les tiges 12, 17 sont placées sur le corps du moyen de rangement 11 et sont avantageusement situées perpendiculairement à un axe longitudinal du corps du moyen de rangement 11. Selon un autre mode de réalisation, le dispositif de rangement 1 peut comprendre un moyen de maintien 18 pour améliorer le maintien des brins secondaires 5, 6 avec le brin principal 4. Le moyen de maintien 18 est de préférence un cylindre creux ouvert à ses deux extrémités 30, 31, par exemple un tube creux, pour laisser passer les brins secondaires 5, 6 lors de leur logement dans le moyen de rangement 11. Le moyen de maintien 18 comporte en outre un moyen d'accrochage supplémentaire 19 et peut comporter un moyen d'enroulement additionnel 20. Le moyen d'accrochage supplémentaire 19 est par exemple un crochet, une sangle, ou une lanière à bande autoagrippante, pour accrocher le moyen de maintien 18 au brin principal 4. En outre, le moyen d'accrochage supplémentaire 19 peut être configuré pour accrocher de manière amovible le moyen de maintien 18 au brin principal 4. Ainsi, l'utilisateur peut régler la position du moyen de maintien 18 par rapport au moyen de rangement 11, en fonction de la longueur des brins secondaires 5, 6. Le dispositif de rangement 1 peut également comprendre au moins un piton 21 à 23 pour accrocher le dispositif de rangement 1, par exemple soit sur un mur pour ranger la canne à pêche 2 démontée, soit sur une sangle pour transporter la canne à pêche 2 démontée, sur le ventre ou en bandoulière.

Sur la figure 2, on a représenté la canne à pêche 2 dans une position montée, c'est-à-dire avec les brins secondaires 5, 6 emboîtés les uns avec les autres et avec le brin principal 4. Dans la position montée, la ligne 3 passe dans chaque anneau 9 des brins secondaires 5, 6, et du brin principal 4, on dit que la ligne 3 est montée. Dans la position montée, le dispositif de rangement 1 est accroché au brin principal 4. Par exemple, les moyens d'accrochage 15, 16 sont suffisamment longs pour créer un espace entre le corps du moyen de rangement 11 et la poignée 7 du brin principal 4 afin de ne pas gêner la prise en main de la canne à pêche montée 2. Le moyen de maintien 18 peut être accroché de manière amovible sur le corps du moyen de rangement 11, comme illustré sur la figure 2, ou sur le brin principal 4, comme illustré sur la figure 3.

Sur la figure 3, on a représenté la canne à pêche 2 dans une position démontée avec les brins secondaires 5, 6 logés dans le moyen de rangement 11. Pour ranger la canne à pêche 2 à l'aide du dispositif de rangement 1, on démonte les brins secondaires 5, 6, puis on loge les brins secondaires 5, 6 démontés dans le moyen de rangement 11. Avantageusement, lorsqu'on démonte les brins secondaires 5, 6, on conserve la ligne 3 montée, c'est-à-dire que la ligne 3 reste dans les anneaux 9 des brins secondaires 5, 6 et du brin principal 4. Après avoir logé les brins secondaires dans le moyen de rangement 11, on enroule la ligne 3 autour des moyens d'enroulement 12, 17, 20. Lorsque la ligne 3 reste passée dans les anneaux 9, on améliore le maintien des brins secondaires avec le brin principal 4. En effet, en conservant la ligne 3 montée, on peut orienter facilement la canne à pêche 2 démontée dans toutes les directions tout en conservant les brins secondaires 5, 6 solidaires entre eux. Selon une variante d'utilisation, on peut également démonter la ligne 3, dans ce cas elle est extraite des anneaux 9, et on peut entourer les brins secondaires 5, 6 avec la ligne 3 démontée. En d'autres termes, on entoure la ligne 3 démontée autour des brins 4 à 6 et des moyens d'enroulement 12, 17, 20 pour solidariser les brins secondaires 5, 6 avec le brin principal 4. Pour monter la canne à pêche 2, à partir de sa position démontée, on effectue les étapes précédentes en sens inverse. En d'autres termes, on déroule la ligne 3 des moyens d'enroulement 12, 17, 20, on extrait les brins secondaires 5, 6 hors du moyen de logement 11, et on emboîte les brins secondaires 5, 6 les uns avec les autres et avec le brin principal 4. On obtient ainsi une canne à pêche 2 montée avec la ligne 3 également montée.

Dans l'exemple illustré à la figure 3, la canne à pêche 2 est dans une position verticale par rapport au sol. Le dispositif de rangement 11 permet également de maintenir les brins secondaires 5, 6 solidaires du brin principal 4 quelle que soit la position de la canne à pêche 2 démontée, horizontale, verticale, ou inclinée, par rapport au sol. Ainsi, on offre un moyen pour transporter facilement la canne à pêche 2 en position démontée. Plus particulièrement, on offre un moyen simple pour transporter une canne à pêche 2 démontée avec sa ligne 3 prémontée. Il n'est pas nécessaire de démonter la ligne 3, ce qui permet un montage et un démontage rapide de la canne à pêche 2.

Certaines cannes à pêche démontables peuvent avoir des brins secondaires qui ont, chacun, deux anneaux 9 situés aux deux extrémités du brin. Dans ce cas, on peut prévoir un moyen de rangement 11 ayant un corps creux dont la section a un diamètre suffisamment grand pour loger un anneau 9 du brin secondaire 5, 6 en plus du brin secondaire lui-même. Le dispositif de rangement 1 est particulièrement adapté pour loger les deux types de brin, à savoir les brins ayant un unique anneau situé à une extrémité du brin, comme illustré aux figures 1 à 3, et les brins qui comportent deux anneaux situés aux deux extrémités.

L'invention qui vient d'être décrite fournit une canne à pêche démontable facile à transporter et à entreposer pour être prête à l'emploi.

## Revendications

1. Dispositif de rangement pour canne à pêche (2) à la ligne (3), la canne à pêche (2) étant démontable et comprenant un brin principal (4) équipé d'un moulinet (8) pour enrouler la ligne (3) et au moins un brin secondaire (5, 6) démontable configuré pour s'emboîter avec le brin principal (4) afin de monter la canne à pêche (2), le dispositif comprenant :
- un moyen de rangement (11) pour loger ledit au moins un brin secondaire (5, 6), , et
- un moyen d'enroulement (12) pour enrouler la ligne (3) de sorte que ledit au moins un brin secondaire (5, 6) soit maintenu solidaire avec le brin principal (4), le moyen de rangement (11) étant un cylindre creux fermé à une extrémité pour maintenir ledit au moins un brin secondaire (5, 6) avec le brin principal (4), et ouvert à l'autre extrémité pour laisser passer ledit au moins un brin secondaire (5, 6) lors de son logement dans le moyen de rangement (11),
**caractérisé en ce que** le moyen de rangement (11) comporte deux moyens d'accrochage (15, 16) pour accrocher le moyen de rangement (11) au brin principal (4) et éloignés l'un de l'autre pour être accrochés de part et d'autre du moulinet (8).

2. Dispositif selon la revendication 1, comportant un moyen de maintien (18) pour maintenir ledit au moins un brin secondaire (5, 6) avec le brin principal (4), pourvu d'un moyen d'accrochage (19) pour accrocher le moyen de maintien (18) au brin principal (4).

3. Dispositif selon la revendication 2, dans lequel le moyen de maintien (18) est un cylindre creux ouvert à ses deux extrémités pour laisser passer ledit au moins un brin secondaire (5, 6) lors de son logement dans le moyen de rangement (11).

4. Dispositif selon l'une des revendications 1 à 3, dans lequel les moyens d'accrochage (15, 16) du moyen de rangement (11) sont configurés pour accrocher de manière amovible le moyen de rangement (11) au brin principal (4).

5. Dispositif selon l'une des revendications 2 à 4, dans lequel le moyen d'accrochage (19) du moyen de maintien (18) est configuré pour accrocher de manière amovible le moyen de maintien (18) au brin principal (4) ou au moyen de rangement (11).

6. Dispositif selon l'une des revendications 1 à 5, comprenant au moins un piton (21 à 23) pour accrocher le dispositif lorsque ledit au moins un brin secondaire (5, 6) est logé dans le moyen de rangement (11).

7. Canne à pêche à la ligne, comprenant un brin principal (4) équipé d'un moulinet (8) pour enrouler la ligne (3) et au moins un brin secondaire (5, 6) démontable configuré pour s'emboîter avec le brin principal (4) afin de monter la canne à pêche, et comprenant un dispositif de rangement selon l'une des revendications 1 à 6.
